# EUROPÄISCHE PATENTSCHRIFT

(11) **EP 3 327 216 B1**
(45) Veröffentlichungstag und Bekanntmachung des Hinweises auf die Patenterteilung: **21.08.2019**
(21) Anmeldenummer: 17001805.5
(22) Anmeldetag: 06.11.2017
(51) Int. Cl.: E04F 13/08

(54) **OBERFLÄCHENBEKLEIDUNGSUNTERKONSTRUKTIONSEINHEIT**
FIXATION OF FACADE ELEMENTS ON A BUILDING WALL
FIXATION D'ÉLÉMENTS DE FAÇADE SUR UN MUR DE BÂTIMENT

(30) Priorität: 24.11.2016 DE 202016007201 U
(43) Veröffentlichungstag der Anmeldung: 30.05.2018
(73) Patentinhaber: Rieke, Lothar, 37308 Pfaffschwende (DE)
(72) Erfinder: Rieke, Lothar, 37308 Pfaffschwende (DE)
(74) Vertreter: Weihrauch, Frank

(56) Entgegenhaltungen:
- EP-A1- 1 400 704
- DE-A1-102004 005 328
- DE-A1-102010 047 242
- DE-U1-202015 008 507

## Beschreibung

Die Erfindung betrifft eine Oberflächenbekleidungsunterkonstruktionseinheit für die Befestigung von Bekleidungselementen an einer Unterstruktur.

Insbesondere betrifft die Erfindung die Befestigung von Fassadenelementen an einer Gebäudewand, welche sich aus einer Dämmschicht sowie dem darunterliegenden Mauerwerksabschnitt zusammensetzt.

Zur Befestigung von Fassadenelementen an einer Gebäudewand sind aus dem Stand der Technik diverse Lösungsansätze bekannt. Meist werden dabei mehrteilige Fassadenunterkonstruktionen verwendet, welche vorzugsweise an der Gebäudewand abgestützt werden und die Fassadenelemente tragen.

Bekannte Fassadenunterkonstruktionen umfassen zu diesem Zweck häufig vertikale oder horizontale Grundprofilträger, an diesen angebrachte kreuzende horizontale oder vertikale Profilträger sowie weitere Halteelemente. Daher erfordern derartige Fassadenunterkonstruktionen eine mehrstufige und entsprechend aufwendige Montage.

Eine solche Fassadenunterkonstruktion, bestehend aus vertikalen Tragprofilen und horizontalen Halteprofilen, wird auch in der Druckschrift DE 94 20 155 U1 beschrieben. Die horizontalen Halteprofile liegen hierbei in Form von H-Profilen vor und werden zumindest an ihren beiden Enden über ihren gebäudeseitigen Längsschenkel an den vertikalen Trageprofilen befestigt.

Die Druckschrift DE 10 2004 005 328 A1 beschreibt eine Möglichkeit zur Befestigung von Bauteilen an Mauerwerken, die eine weniger komplexe Konstruktion vorsieht. Die hierbei offenbarte Spezialschraube weist einen Kopf-/Schaftabschnitt sowie einen sich axial daran anschließenden Außengewindeabschnitt auf. Der Außengewindeabschnitt steht bestimmungsgemäß im Eingriff mit dem Mauerwerk. In den Kopf-/Schaftabschnitt ist stirnseitig eine axiale Bohrung mit Werkzeugansatz und Innengewinde eingebracht. Somit kann eine Befestigungsschraube zur Befestigung eines Bauteils in das vorhandene Innengewinde eingeschraubt werden. Nachteilig an dieser Lösung ist jedoch, dass die Befestigungsschraube von außen sichtbar ist.

Unter Vermeidung der genannten Nachteile des Standes der Technik ist es die Aufgabe der Erfindung, eine Oberflächenbekleidungsunterkonstruktionseinheit bereitzustellen, mittels welcher ein Bekleidungselement zuverlässig an einer Unterstruktur befestigbar ist und welches zugleich einfach montierbar, vielseitig anwendbar sowie kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Eine erfindungsgemäße Oberflächenbekleidungsunterkonstruktionseinheit weist einen Dämmschichtschraubanker sowie einen Unterstrukturanker auf.

Der Dämmschichtschraubanker setzt sich erfindungsgemäß aus einem Stützbolzen, einer Auflagescheibe, einer Helixstruktur und einem Aussteifungsabschnitt zusammen.

Der Stützbolzen ist eine länglich ausgebildete und vorzugsweise zylindrische Struktur, welche ein erstes und ein zweites Ende aufweist und welche zudem von einem axialen Hohlkanal durchsetzt wird.

Die Auflagescheibe ist mit dem zweiten Ende des Stützbolzens verbunden. Sie ist flächig sowie vorzugsweise rund ausgebildet und weist eine Oberseite sowie eine der Oberseite gegenüberliegende Unterseite auf. Der Stützbolzen ist somit an der Unterseite mit der Auflagescheibe verbunden. Eine Planebene der Auflagescheibe ist dabei rechtwinklig zur Längsachse des Stützbolzens angeordnet.

An der Oberseite der Auflagescheibe ist ein Bekleidungselement, insbesondere ein Fassadenelementm befestigbar. Die Auflagescheibe weist zu diesem Zweck eine Mehrzahl von Durchsetzungen auf. Die Durchsetzungen sind zum ersten dazu geeignet, eine Klebeverbindung mit einem Fassadenelement bereitzustellen, indem eine auf der Oberseite befindliche Klebemasse bei einem Aufdrücken des Fassadenelements teilweise durch die Durchsetzungen dringt und vorzugsweise an der Unterseite verkrümmt oder pilzkopfartig aufquillt und so nach einem Aushärten eine stoffschlüssige Verbindung bereitstellt. Zum zweiten können die Durchsetzungen auch Schraub- oder Steckverbindungen aufnehmen. Die beiden Verbindungsarten sind zudem auch kombinierbar. Des Weiteren ist die Größe der Auflagescheibe entsprechend der Größe der anzubringenden Fassadenelemente zu wählen.

Die Helixstruktur umgibt den Stützbolzen zumindest abschnittsweise, wobei die Helixstruktur und der Stützbolzen in einer festen Lagebeziehung zueinander stehen. Vorzugsweise ist die Helixstruktur an den Stützbolzen angeformt, dabei sind Helixstruktur und Stützbolzen vorzugsweise einteilig hergestellt. Vorzugsweise weist die Helixstruktur einen groben Aufbau mit großer Tiefe auf, um in einem Dämmmaterial guten Halt zu gewährleisten.

Der Aussteifungsabschnitt ist sowohl mit dem Stützbolzen als auch mit der Unterseite der Auflagescheibe verbunden. Der Aussteifungsabschnitt entlastet die Verbindungsstelle von Auflagescheibe und Stützbolzen und erhöht die Knickstabilität des Dämmschichtschraubankers. Zudem wird die Torsionsbelastung des Stützbolzens während der Montage, welche durch Eindrehen erfolgt, reduziert.

Der Unterstrukturanker ist in den axialen Hohlkanal des Stützbolzens einbringbar. Er weist ein erstes und ein zweites Ende auf, wobei der Unterstrukturanker an seinem ersten Ende einen Eingriffsabschnitt aufweist.

In einer Montageendlage ragt der Unterstrukturanker über das erste Ende des Stützbolzens hinaus. Der Eingriffsabschnitt greift somit in der Montageendlage in eine Unterstuktur ein, wobei es sich in den meisten Fällen um einen Mauerwerksabschnitt handelt. Als Unterstuktur ist jedoch darüber hinaus jede Stuktur anzusehen, die eine Dämmebene trägt, so dass auch Geschossdecken, Holzfaserplatten und Ständerkonstruktionen erfasst sind. Am zweiten Ende des Unterstrukturankers liegt indes ein Kopfabschnitt mit einer radialen Überkragung vor. Der Kopfabschnitt kann dabei beispielsweise als ein Schraubenkopf ausgebildet sein und dient der Übertragung von axialen Kräften zwischen dem Unterstrukturanker und dem Dämmschichtschraubanker.

Die Montage der Oberflächenbekleidungsunterkonstruktionseinheit erfolgt erfindungsgemäß ensprechend den nachfolgenden Schritten. Zunächst wird der Dämmschichtschraubanker in einem ersten Arbeitsschritt in die Dämmschicht eingeschraubt. Anschließend wird eine Bohrung in die Unterstruktur, insbesondere in ein Mauerwerk eingebracht, wobei der axiale Hohlkanal des Stützbolzens den Bohrer führt und eine exakte Positionierung der Bohrung in der Längsachse des Hohlkanals sicherstellt. In dem nun folgenden Montageschritt wird nach Entfernung des Bohrers aus der Bohrung und dem Hohlkanal der Unterstrukturanker in den Hohlkanal bis in die Bohrung eingebracht und befestigt, wobei der Eingriffsabschnitt die Verankerung in der Unterstrukur gewährleistet. Sofern der Eingriffsabschnitt in einer Variante als Gewindeschraube oder Nagel ausgebildet ist, kann bei geeignetem Material der Unterstruktur wie beispielsweise Holzwerkstoffen das vorherige Setzen einer Bohrung entfallen und die Verankerung in der Unterstruktur direkt durch Einschrauben oder Einschlagen erfolgen.

Somit wird die Oberflächenbekleidungsunterkonstruktionseinheit zum einen in der Dämmschicht und zum anderen in der Unterstruktur befestigt. Ferner können so axiale Kräfte und Scherkräfte zwischen der Unterstuktur und der Dämmebene übertragen werden.

Nach der bestimmungsgemäßen Montage wird die Anbringung von Fassadenelementen an der Oberseite der Auflagescheibe, vorzugsweise mittels Kleben, Nieten oder Schrauben, ermöglicht. Durch eine zwischen der Auflagescheibe und der Oberfläche der Dämmschicht einstellbare Distanz kann dabei zudem eine Hinterlüftungszone ausgebildet werden. Somit sind hinterlüftete Fassaden realisierbar, welche eine Regelung des Feuchtehaushalts im Baukörper durch die Abführung von Bau- und Nutzungsfeuchte ermöglichen.

Als geeignete Dämmstoffe kommen insbesondere geschäumte Kunststoffe wie Schaumpolystyrol oder Schaumpolyurethan sowie ausreichend feste Faserdämmstoffe in Betracht.

Es wurde gefunden, dass sich sowohl die Auszugsfestigkeit als auch insbesondere die Scherkraftaufnahmefähigkeit deutlich erhöhen lässt, wenn die Dämmschicht an deren Oberfläche mit einer Armierung, beispielsweise einem Armierungsgewebe versehen ist. Daher kann es auch bei einer Anwendung an einer neu erstellten Dämmung zweckmäßig sein, zunächst eine Armierung aufzubringen und dann die erfindungsgemäße Oberflächenbekleidungsunterkonstruktionseinheit zu montieren.

Die Fassadenelemente sind ebenso wie die Dämmschicht und die Unterstruktur jedoch kein Bestandteil der erfindungsgemäßen Oberflächenbekleidungsunterkonstruktionseinheit.

Die Oberflächenbekleidungsunterkonstruktionseinheit weist insbesondere die folgenden Vorteile auf.

Ein erster Vorteil besteht hinsichtlich der besonderen Einfachheit der Konstruktion. Die Montage der Oberflächenbekleidungsunterkonstruktionseinheit kann in wenigen Schritten und mit geringem Aufwand erfolgen, wobei der Dämmschichtschraubanker werkzeuglos durch manuelles Eindrehen montierbar ist. Optional kann auch ein Formabschnitt wie beispielsweise ein Innensechskant in der Auflagescheibe des Dämmschichtschraubankers ausgebildet sein, so dass eine Montageunterstützung durch handgeführte elektrische Schraubwerkzeuge möglich ist.

Hinsichtlich der Montage ist insbesondere das Vorliegen des axialen Hohlkanals in dem Stützbolzen von Vorteil. Somit wird eine exakte Positionierung der Bohrung entlang der Längsachse des Hohlkanals sowie eine exakte Anordnung des einzubringenden Unterstrukturankers in dem Hohlkanal und insbesondere des Eingriffsabschnitts in der entstandenen Bohrung, alternativ ohne Bohrung direkt in der Unterstruktur, gewährleistet.

Des Weiteren ist es vorteilhaft, dass die Oberflächenbekleidungsunterkonstruktionseinheit auch bei bestehenden Wärmedämmfassaden montierbar ist, so dass eine nachträgliche Montage ohne ein sonst zumindest teilweise erforderliche Zerstörung der Dämmschicht ermöglicht wird.

Von besonderem Vorteil ist die geringe Materialverdrängung bei dem Einschrauben des Dämmschichtschraubankers. Dies beruht darauf, dass der axiale Hohlkanal in dem Stützbolzen während des Einschraubens Material aus der Dämmschicht aufnehmen kann, da der Stützbolzen wie ein Kernlochbohrer wirkt. Begünstigt wird dies, wenn gemäß einer vorteilhaften Weiterbildung der Stützbolzen an seinem ersten Ende eine Schneidkontur aufweist. Das auf diese Weise im axialen Hohlkanal aufgenommene Dämmmaterial kann beispielsweise während eines nachfolgende Bohrvorgang für eine Bohrung für den Unterstrukturanker herausgefördert werden.

Diesbezüglich ist es auch vorteilhaft, dass der Abstand der Fassadenelemente von der Dämmschicht durch die jeweilige Einschraubtiefe wunschgemäß eingestellt werden kann. Somit können zudem etwaige Unebenheiten der Unterstruktur, insbesondere des Mauerwerks, mittels einer stufenlos einstellbaren Breite der Hinterlüftungszone ausgeglichen werden, so dass eine planebene Anordnung sämtlicher Fassadenelemente erreicht wird.

Ein Vorteil ergibt sich auch bezüglich der besonders guten thermischen Trennung, da der Dämmschichtschraubanker in der Dämmschicht verankert wird und nicht in der zu isolierenden tragenden Unterstruktur.

Letztlich besteht ein besonderer Vorteil darin, dass die Befestigung sowohl in der Dämmschicht als auch in der Unterstruktur erfolgt, so dass eine stabile Verankerung sowie eine statische Verstärkung erzielt werden. Daher können jegliche vorhandenen Zug- und Scherkräfte aufgenommen werden. Zusätzlich zur Befestigung der Fassadenelemente wird auch die Dämmschicht an der Unterstuktur befestigt.

Eine vorteilhafte Weiterbildung der beschriebenen Lösung besteht darin, dass der Dämmschichtschraubanker zusätzlich eine zur Auflagescheibe beabstandete Anschlagplatte aufweist. Diese ist parallel zur Auflagescheibe angeordnet und vorzugsweise von runder Form. Zudem wird die Anschlagplatte von dem Stützbolzen durchsetzt. Die Helixstruktur ist auf der der Auflagescheibe abgewandten Seite der Anschlagplatte angeordnet.

Diese Weiterbildung ermöglicht eine exakte Einstellung der Distanz zwischen den Fassadenelementen und der Dämmschicht, indem die Anschlagplatte die Eindringtiefe des Dämmschichtschraubankers in die Dämmschicht festlegt. Der Dämmschichtschraubanker lässt sich somit maximal bis zum Erreichen der Anschlagplatte in die Dämmschicht eindrehen. Damit verbunden ist auch eine weitere Vereinfachung der Montage, da ein Justierungsaufwand entfallen kann oder reduziert wird.

Besonders vorteilhaft ist diese Weiterbildung bei einer ebenen Dämmschicht. Aber auch bei unebenen Dämmschichten besteht der Vorteil der Sicherung einer Mindesthinterlüftungsbreite.

Gemäß einer weiteren, vorteilhaften Ausgestaltung ist der Aussteifungsabschnitt zusätzlich mit der Anschlagplatte verbunden. Der Aussteifungsabschnitt ist folglich mit dem Stützbolzen, mit der Unterseite der Auflagescheibe und mit der Anschlagplatte verbunden. Somit wird neben einer verbesserten Stabilität der Konstruktion auch eine einfachere Möglichkeit der Anbringung des Dämmschichtschraubankers erreicht, wobei der Aussteifungsabschnitt als Haltegriff fungiert.

Nach einer nächsten bevorzugten Weiterbildung weist der Unterstrukturanker einen Bolzen und einen diesen umgebenden Dübelmantel auf. Dabei sind Bolzen und Dübelmantel koaxial zueinander angeordnet. Erfindungsgemäß kann der Bolzen insbesondere als eine Schraube ausgebildet sein, wobei dann der Kopfabschnitt des Unterstrukturankers als Schraubenkopf vorliegt.

Der Vorteil des zweiteiligen Aufbaus gemäß dieser Weiterbildung ist insbesondere, dass durch das Spreizen des Dübelmantels in der Montageendlage ein verbesserter Halt des Eingriffsabschnitts des Unterstrukturankers in einer als Mauerwerk ausgebildeten Unterstruktur bewirkt wird.

Der Dämmschichtschraubanker ist gemäß einer weiteren vorteilhaften Ausgestaltung aus einem Kunststoff gefertigt. Hieraus ergeben sich mehrere Vorteile. Zum einen wird somit eine geringere Wärmeleitfähigkeit erreicht. Diese verbessert die thermischen Eigenschaften, da der Dämmschichtschraubanker in die Dämmschicht eindringt und in der Folge die Bildung von Wärmebrücken vermieden wird. Daneben liegen gegenüber der Verwendung von metallischen Werkstoffen Vorteile bezüglich der einfacheren Herstellbarkeit, beispielsweise als Spritzgussteil, sowie im Bereich des Korrosionsschutzes vor.

Die Erfindung wird als Ausführungsbeispiel anhand von
Fig. 1 Perspektivische Ansicht der Oberflächenbekleidungsunterkonstruktionseinheit,
Fig. 2 Schnittansicht der Oberflächenbekleidungsunterkonstruktionseinheit,
Fig. 3 Schnittansicht der Oberflächenbekleidungsunterkonstruktionseinheit in der Montageendlage,
Fig. 4 Explosionsansicht der Oberflächenbekleidungsunterkonstruktionseinheit näher erläutert.

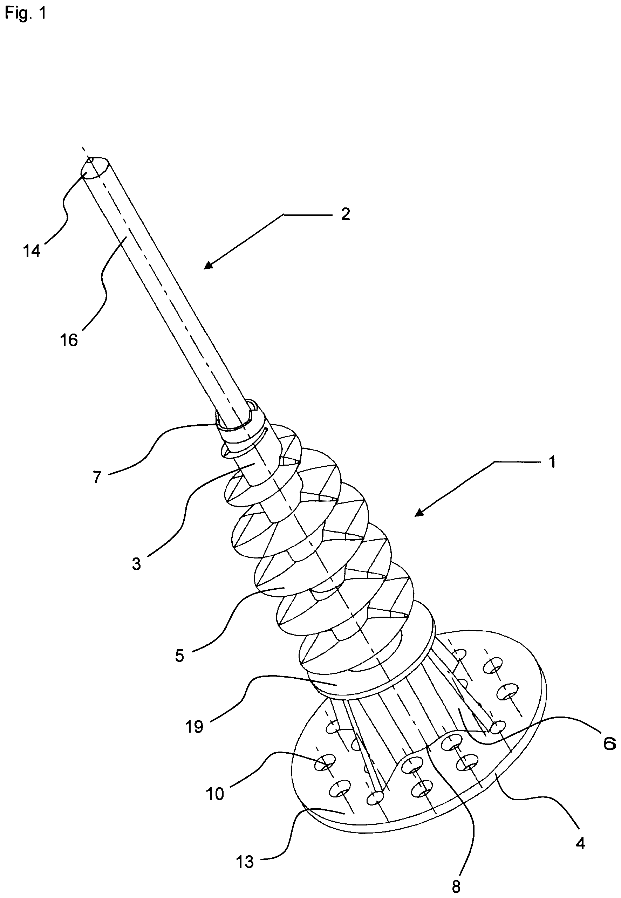

Fig. 1 zeigt die erfindungsgemäße Oberflächenbekleidungsunterkonstruktionseinheit in einer perspektivischen Ansicht. Der Dämmschichtschraubanker 1 setzt sich aus einem Stützbolzen 3, einer Auflagescheibe 4, einer Helixstruktur 5 sowie einem Aussteifungsabschnitt 6 zusammen.

Der Stützbolzen 3 wird von einem axialen Hohlkanal (hier ohne Bezugszeichen) durchsetzt, so dass dieser als hohlzylindrischer Körper vorliegt. Der Stützbolzen 3 wird von der Helixstruktur 5 abschnittsweise umgeben, wobei diese in bekannter Weise zu einem gemeinsamen Formkörper verbunden sind. Der Durchmesser der Helixstruktur 5 nimmt in Richtung des ersten Endes 7 des Stützbolzens 3 ab. Vorliegend weist das erste Ende 7 des Stützbolzens 3 spitz zulaufende Anformungen auf, welche ein verbessertes bei dem Eindrehen ein besseres Eindringen in eine Dämmschicht ermöglichen. Die Auflagescheibe 4 weist eine Mehrzahl von Durchsetzungen 10 auf, welche die Befestigung an einem Bekleidungselement mittels Kleben, Steck- oder Schraubverbindungen ermöglichen.

Im dargestellten Ausführungsbeispiel weist der Dämmschichtschraubanker 1 zusätzlich eine Anschlagplatte 19 auf. Diese stellt insbesondere einen Anschlag bei der Montage des Dämmschichtschraubankers 1 und somit einen Mindestabstand von der Dämmschicht zu einem anzubringenden Bekleidungselement bereit.

Der Aussteifungsabschnitt 6 ist hierbei sowohl mit dem Stützbolzen 3 als auch mit der Auflagescheibe 4 und mit der Anschlagplatte 19 verbunden. Mittels des Aussteifungsabschnitts 6 wird die Stabilität der gesamten Konstruktion verbessert und die Verbindungsstelle von Stützbolzen 3 und Auflagescheibe 4 entlastet. Zudem kann der Aussteifungsabschnitt 6 als Haltegriff bei dem Eindrehen des Dämmschichtschraubankers 1 fungieren.

Der Unterstrukturanker 2 ist in den axialen Hohlkanal eingebracht und ragt dabei über das erste Ende 7 des Stützbolzens 3 hinaus.

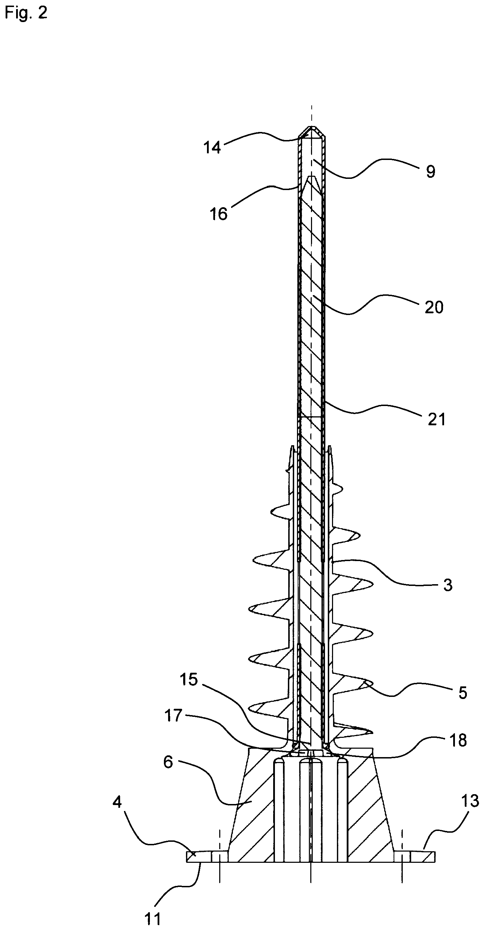

In der Fig. 2 wird der Aufbau des Unterstrukturankers 2 genauer verdeutlicht-Gemäß dem vorliegenden Ausführungsbeispiel setzt sich der Unterstrukturanker 2 aus einem Bolzen 20 und einem diesen Bolzen umgebenden Dübelmantel 21 zusammen. Der Bolzen 20 liegt hierbei im Speziellen als Befestigungsschraube vor. Am ersten Ende 14 des Unterstrukturankers 2 wird ein Eingriffsabschnitt 16 ausgebildet, welcher eine Verankerung in einer Unterstruktur 23 ermöglicht, die gemäß dem Ausführungsbeispiel ein Mauerwerk darstellt. Die Verankerung erfolgt hierbei insbesondere durch ein Spreizen des Dübelmantels 21 bei einem Festziehen der Befestigungschraube. Am zweiten Ende 15 weist der Unterstrukturanker 2 einen Kopfabschnitt 17 mit einer radialen Überkragung 19 auf. Der Kopfabschnitt 17, welcher hierbei als Schraubenkopf ausgebildet ist, dient der Aufnahme axialer Kräfte und stellt eine Schnittstelle für handgeführte elektrische oder manuelle Schraubwerkzeuge bereit. Alternativ kann der Unterstrukturanker 2 als Einschlagdübel ausgebildet sein.

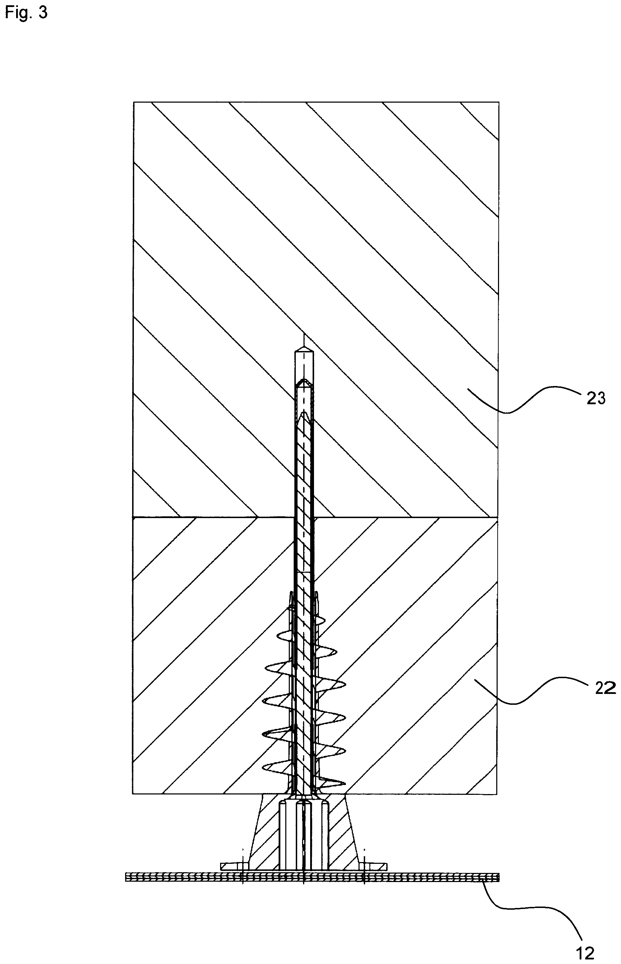

Fig. 3 zeigt die erfindungsgemäße Oberflächenbekleidungsunterkonstruktionseinheit in der Montageendlage.

Im Rahmen der Montage wird der Dämmschichtschraubanker 1 in einem ersten Schritt werkzeuglos durch manuelles Eindrehen in die Dämmschicht 22 geschraubt. Im Anschluss daran wird eine Bohrung in die als Mauerwerk vorliegende Unterstruktur 23 eingebracht, wobei der axiale Hohlkanal 9 des Stützbolzens 3 den Bohrer führt und eine exakte Positionierung der Bohrung in der Längsachse des Hohlkanals 9 sicherstellt. In dem nun folgenden Montageschritt wird der Unterstrukturanker 2 in den Hohlkanal 9 eingebracht und befestigt. Hierzu wird die Befestigungsschraube in dem Dübelmantel 21 festgezogen und verspannt. Letztlich wird ein Bekleidungselement 12 mittels einer Klebeverbindung an die Oberseite 11 der Auflagescheibe 4 angebracht.

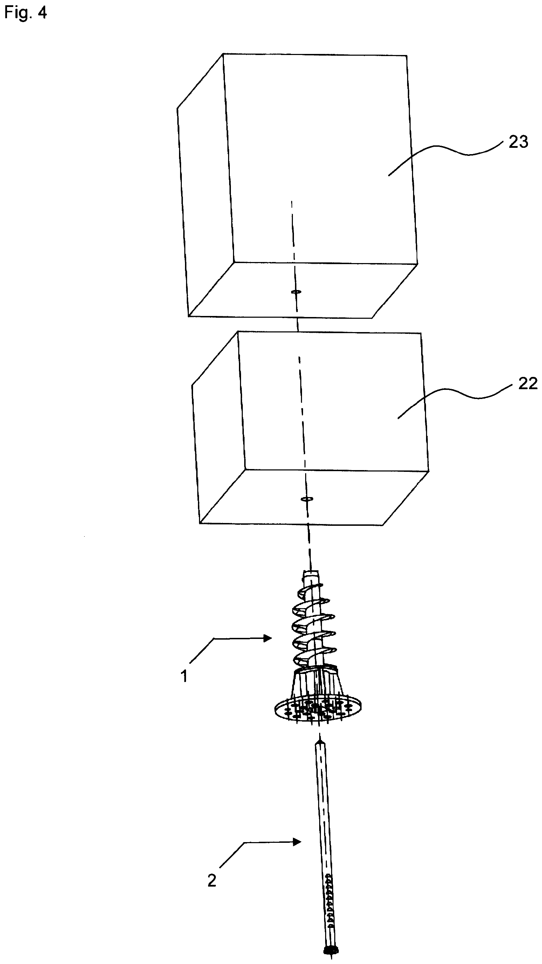

Fig. 4 zeigt eine weitere Darstellung der Oberflächenbekleidungsunterkonstruktionseinheit, wobei der Dämmschichtschraubanker 1 und der Unterstrukturanker 2 gemeinsam mit der Dämmschicht 22 und der Unterstruktur 23 als Explosionszeichnung gezeigt werden. Zudem ist hierbei die Bohrung entlang der Längsachse des Hohlkanals 9, welche zugleich der Längsachse des Unterstrukturankers 2 entspricht, angedeutet.

### Verwendete Bezugszeichen

- 1: Dämmschichtschraubanker
- 2: Unterstrukturanker
- 3: Stützbolzen
- 4: Auflagescheibe
- 5: Helixstruktur
- 6: Aussteifungsabschnitt
- 7: erstes Ende des Stützbolzens
- 8: zweites Ende des Stützbolzens
- 9: axialer Hohlkanal
- 10: Durchsetzung
- 11: Oberseite der Auflagescheibe
- 12: Bekleidungselement
- 13: Unterseite der Auflagescheibe
- 14: erstes Ende des Unterstrukturankers
- 15: zweites Ende des Unterstrukturankers
- 16: Eingriffsabschnitt
- 17: Kopfabschnitt
- 18: Überkragung
- 19: Anschlagplatte
- 20: Bolzen
- 21: Dübelmantel
- 22: Dämmschicht
- 23: Unterstruktur

## Patentansprüche

1. Oberflächenbekleidungsunterkonstruktionseinheit, aufweisend einen Dämmschichtschraubanker (1) sowie einen Unterstrukturanker (2),
wobei der Dämmschichtschraubanker (1) einen Stützbolzen (3), eine Auflagescheibe (4), eine Helixstruktur (5) sowie einen Aussteifungsabschnitt (6) aufweist,
wobei der Stützbolzen (3) ein erstes und ein zweites Ende (7; 8) aufweist und wobei der Stützbolzen (3) einen axialen Hohlkanal (9) aufweist, wobei die Auflagescheibe (4) mit dem zweiten Ende (8) des Stützbolzens (3) verbunden ist, wobei eine Planebene der Auflagescheibe (4) rechtwinklig zur Längsachse des Stützbolzens (3) angeordnet ist, wobei die Auflagescheibe (4) eine Mehrzahl von Durchsetzungen (10) aufweist und wobei an einer Oberseite (11) der Auflagescheibe (4) ein Bekleidungselement (12) befestigbar ist, wobei die Helixstruktur (5) den Stützbolzen (3) zumindest abschnittsweise umgibt und wobei die Helixstruktur (5) und der Stützbolzen (3) in einer festen Lagebeziehung zueinander stehen, wobei der Aussteifungsabschnitt (6) sowohl mit dem Stützbolzen (3) als auch mit einer Unterseite (13) der Auflagescheibe (4) verbunden ist,
wobei der Unterstrukturanker (2) ein erstes und zweites Ende (14; 15) aufweist, wobei der Unterstrukturanker (2) an dessen ersten Ende (14) einen Eingriffsabschnitt (16) aufweist, wobei der Unterstrukturanker (2) in den axialen Hohlkanal (9) einbringbar ist, wobei der Unterstrukturanker (2) in einer Montageendlage über das erste Ende (7) des Stützbolzens (3) hinausragt und wobei der Unterstrukturanker (2) an dessen zweiten Ende (15) einen Kopfabschnitt (17) mit radialer Überkragung (18) aufweist.

2. Oberflächenbekleidungsunterkonstruktionseinheit nach Anspruch 1, **dadurch gekennzeichnet,**
**dass** der Dämmschichtschraubanker (1) zusätzlich eine zur Auflagescheibe (4) beabstandete Anschlagplatte (19) aufweist, wobei die Anschlagplatte (19) parallel zur Auflagescheibe (4) angeordnet ist, wobei die Anschlagplatte (19) von dem Stützbolzen (3) durchsetzt wird und wobei die Helixstruktur (5) auf der der Auflagescheibe (4) abgewandten Seite der Anschlagplatte (19) angeordnet ist.

3. Oberflächenbekleidungsunterkonstruktionseinheit nach Anspruch 2,
**dadurch gekennzeichnet,**
**dass** der Aussteifungsabschnitt (6) zusätzlich mit der Anschlagplatte (19) verbunden ist.

4. Oberflächenbekleidungsunterkonstruktionseinheit nach einem der vorherigen Ansprüche,
**dadurch gekennzeichnet,**
**dass** der Unterstrukturanker (2) einen Bolzen (20) und einen diesen umgebenden Dübelmantel (21) aufweist, wobei Bolzen (20) und Dübelmantel (21) koaxial zueinander angeordnet sind.

5. Oberflächenbekleidungsunterkonstruktionseinheit nach einem der vorherigen Ansprüche,
**dadurch gekennzeichnet,**
**dass** der Dämmschichtschraubanker (1) aus einem Kunststoff hergestellt ist.

## Claims

1. A surface cladding sub-construction unit, comprising an insulating layer screw anchor (1) and a substructure anchor (2), wherein the insulating layer screw anchor (1) comprises a supporting bolt (3), a support disc (4), a helix structure (5), and a stiffening section (6),
wherein the supporting bolt (3) comprises a first and a second end (7; 8) and wherein the supporting bolt (3) has an axial hollow channel (9), wherein the support disc (4) is connected to the second end (8) of the supporting bolt (3), wherein one planning level of the support disc (4) is arranged in a rectangular angle to the longitudinal axis of the supporting bolt (3), wherein the support disc (4) has a plurality of passages (10), and wherein a cladding member can be mounted at a top face (11) of the support disc (4), wherein the helix structure (5) surrounds the supporting bolt (3) at least in sections, and wherein the helix structure (5) and the supporting bolt (3) are arranged in a fixed position to one another, wherein the stiffening section (6) is connected both to the supporting bolt (3) and to a lower side (13) of the support disc (4),
wherein the substructure anchor (2) comprises a first and a second end (14; 15), wherein the substructure anchor (2) comprises an engagement section (16) at its first end (14), wherein the substructure anchor (2) can be inserted into the axial hollow channel (9), wherein the substructure anchor (2) protrudes the first end (7) of the supporting bolt (3) in a mounting end position, and wherein the substructure anchor (2) has a head part (17) with radial projection (18) at its second end (15).

2. The surface cladding sub-construction unit according to claim 1,
**characterized in**
**that** the insulating layer screw anchor (1) additionally comprises a stop plate (19) positioned at a distance to the support disc (4), wherein the supporting bolt (3) penetrates the stop plate (19), and wherein the helix structure (5) is arranged on the side of the stop plate (19) facing away from the support disc (4).

3. The surface cladding sub-construction unit according to claim 2,
**characterized in**
**that** the stiffening section (6) is additionally connected to the stop plate (19).

4. The surface cladding sub-construction unit according to one of the previous claims,
**characterized in**
**that** the substructure anchor (2) comprises a bolt (20) and a dowel housing (21) surrounding the bolt (20), wherein the bolt (20) and the dowel housing (21) are arranged in a coaxial position to one another.

5. The surface cladding sub-construction unit according to one of the previous claims,
**characterized in**
**that** the insulating layer screw anchor (1) is made of a plastic material.

## Revendications

1. Unité de structure porteuse pour le revêtement de surface, présentant un goujon d'ancrage pour la couche isolante (1) ainsi qu'un ancrage de la structure porteuse (2),
le goujon d'ancrage pour la couche isolante (1) présentant un boulon d'appui (3),
un disque d'appui (4), une structure en hélice (5) ainsi qu'une section de renforcement (6),
le boulon d'appui (3) présentant une première et une deuxième extrémité (7; 8) et le boulon d'appui (3) présentant un canal axial creux (9), le disque d'appui (4) étant relié à la deuxième extrémité (8) du boulon d'appui (3), une surface plane du disque d'appui (4) étant disposée à angle droit à un axe longitudinal du boulon d'appui (3), le disque d'appui (4) possédant une pluralité des sections ajourées (10) et un élément de revêtement pouvant être fixé sur une face supérieure (11) du disque d'appui (4), et la structure en hélice (5) entourant le boulon d'appui (3) au moins partiellement et la structure en hélice (5) et le boulon d'appui (3) ayant une relation de position prédéterminée entre eux, la section de renforcement (6) étant reliée au boulon d'appui (3) et à une face inférieure (13) du disque d'appui (4),
l'ancrage de la structure porteuse (2) présentant une première et une deuxième extrémité (14; 15), l'ancrage de la structure porteuse (2) présentant un secteur d'engagement (16) sur sa première extrémité (14), l'ancrage de la structure porteuse (2) pouvant être inséré dans le canal axial creux (9), l'ancrage de la structure porteuse (2) étant en saillie par la première extrémité (7) du boulon d'appui (3) dans une position de fin de course pour le montage et l'ancrage de la structure porteuse (2) présentant une partie de tête (17) avec collerette radiale (18) sur sa deuxième extrémité (15).

2. Unité de structure porteuse pour le revêtement de surface suivant la revendication 1
est **caractérisée en ce**
**que** le goujon d'ancrage pour la couche isolante (1) présente une plaque butée (19) étant disposée de façon espacée au disque d'appui (4) et la plaque butée (19) étant disposée de façon parallèle au disque d'appui (4) et la plaque butée (19) étant transpercée par le boulon d'appui (3) et la structure en hélice (5) étant disposée sur une face détournée du disque d'appui (4) de la plaque butée (19).

3. Unité de structure porteuse pour le revêtement de surface suivant la revendication 2
est **caractérisée en ce**
**que** la section de renforcement (6) est en plus reliée à la plaque butée (19).

4. Unité de structure porteuse pour le revêtement de surface suivant une des revendications précédentes
est **caractérisée en ce**
**que** l'ancrage de la structure porteuse (2) est muni d'un boulon (20) et d'une gaine de cheville (21) entourant ce boulon, le boulon (20) et la gaine de cheville (21) étant disposés coaxialement l'un par rapport à l'autre.

5. Unité de structure porteuse pour le revêtement de surface suivant une des revendications précédentes
est **caractérisée en ce**
**que** le goujon d'ancrage pour la couche isolante (1) est fabriqué en matière plastique.
